Europäisches Patentamt

European Patent Office

Office européen des brevets

(19)

(11) Numéro de publication : **0 516 509 A1**

(12) **DEMANDE DE BREVET EUROPEEN**

(21) Numéro de dépôt : **92401379.0**

(22) Date de dépôt : **21.05.92**

(51) Int. Cl.⁵ : **H02K 49/10,** G01F 1/075

(30) Priorité : **24.05.91 FR 9106237**

(43) Date de publication de la demande :
**02.12.92 Bulletin 92/49**

(84) Etats contractants désignés :
**AT BE CH DE DK ES GB GR IT LI LU NL PT SE**

(71) Demandeur : **SCHLUMBERGER INDUSTRIES**
**50, avenue Jean Jaurès**
**F-92120 Montrouge (FR)**

(72) Inventeur : **Lett, Roland**
**2 rue Léonard de Vinci**
**F-91330 Yerres (FR)**

(54) **Système d'entraînement magnétique et compteur, notamment compteur d'eau, comportant un tel système.**

(57)   Système d'entraînement magnétique comprenant deux couronnes (32,36) concentriques d'aimants arrangés de manière à ce que les forces exercées d'une couronne (32) sur l'autre (36) soient répulsives, les aimants étant en nombre égal et suffisant pour assurer l'autocentrage de la couronne intérieure (36) par rapport à la couronne extérieure (32), un mouvement de rotation de l'une de ces couronnes autour de son axe central entraînant l'autre couronne en rotation, et compteur comprenant un tel système d'entraînement magnétique.

Application notamment aux compteur d'eau.

FIG.1

EP 0 516 509 A1

Jouve, 18, rue Saint-Denis, 75001 PARIS

La présente invention a pour objet un système d'entraînement magnétique et un compteur, notamment un compteur d'eau, comportant un tel système.

On connait plusieurs systèmes d'entraînement magnétique qui sont utilisés en particulier pour transmettre un mouvement à travers une paroi séparant deux fluides qui diffèrent par leurs caractéristiques physiques, chimiques ou leur destination, par exemple pour des pompes, débitmètres ou compteurs de fluide.

Un premier système connu, l'entraînement face à face, comporte un premier aimant en vis-à-vis avec un second aimant. La rotation du premier aimant entraîne la rotation du second par attraction ou répulsion selon la disposition des pôles.

L'entraînement face à face est sensible aux champs magnétiques extérieurs qui peuvent perturber le fonctionnement du dispositif ou la mesure du compteur.

De plus, la sensibilité est limitée du fait des excentrations soit mécaniques, soit magnétiques qui produisent des efforts latéraux sur les paliers de maintien des arbres solidaires des aimants.

Un second système connu, l'entraînement concentrique comporte une première série d'aimants disposés en couronne entourant une seconde série d'aimants eux-mêmes disposés en couronne. Chaque aimant de la première couronne fait face à un aimant de la seconde couronne, pôle nord de l'un face au pôle sud de l'autre.

Chaque couronne est solidaire d'un arbre maintenu par des paliers.

Lorsqu'une des couronnes est mise en rotation, l'autre est entraînée sous l'action d'attraction des aimants.

Un tel système présente peu de sensibilité aux perturbations éventuelles dues à des champs magnétiques extérieurs. De plus, il est peu sujet à des décrochages (qui sont possibles, par exemple, dans un compteur d'eau lorsque le fluide est accéléré brutalement) en raison du fort couple d'entraînement.

Dans les systèmes concentriques connus, les aimants des différentes couronnes s'attirent perpendiculairement à l'axe de rotation. Or une attraction latérale selon une direction particulière existe toujours, due à des causes mécaniques comme les jeux de fonctionnement. Cette attraction latérale se trouve compensée par la réaction des paliers sur les arbres.

Or il se trouve que les couples parasites résultant peuvent être très importants et limitent les domaines d'application d'un tel système malgré les avantages qu'il procure par ailleurs. Par exemple, son utilisation aux compteurs d'eau est limitée aux compteurs pour forts débits (compteurs volumétriques), les importants efforts de frottement sur les paliers interdisant la mesure de faibles débits.

La présente invention pallie ces inconvénients. Elle a pour but de proposer un système d'entraînement magnétique de type concentrique peu sensible aux perturbations magnétiques extérieures, et peu soumis à des efforts latéraux dissymétriques en conséquence présentant une sensibilité accrue permettant une utilisation dans des compteurs d'eau à faible débit, par exemple.

Un autre but de l'invention est de proposer un système d'entraînement magnétique qui ne décroche pas même lorsqu'il est soumis à des accélérations intempestives.

Un autre but de l'invention est de proposer un système d'entraînement magnétique qui soit simple à réaliser et présentant un coût peu élevé.

De manière plus précise la présente invention concerne un système d'entraînement magnétique comprenant deux couronnes concentriques d'aimants, les pôles d'un même type des aimants de la couronne intérieure étant orientés vers la périphérie extérieure de la couronne intérieure, les pôles de ce même type des aimants de la courounne extérieure étant orientés vers la périphérie intérieure de la couronne extérieure, les aimants de chacune des couronnes étant en nombre égal et suffisant pour assurer l'autocentrage de la couronne intérieure par rapport à la couronne extérieure, un mouvement de rotation de l'une des couronnes autour de son axe central entraînant l'autre couronne en rotation.

Les forces répulsives s'exerçant entre les aimants de chaque couronne positionnent une couronne par rapport à l'autre.

Selon un mode préféré de réalisation, les aimants de chaque couronne sont régulièrement répartis sur une circonférence de la couronne considérée, les aimants de la couronne extérieure étant identiques entre eux et les aimants de la couronne intérieure étant identiques entre eux.

Selon un mode particulier de réalisation, les aimants ont une extension telle que les aimants des différentes couronnes se recouvrent partiellement.

Selon un mode préféré de réalisation, chaque couronne comprend au moins quatre aimants.

Il apparait que si les couronnes comprennent moins de quatre aimants, l'attraction entre pôles opposés des aimants des couronnes différentes peut être au moins du même ordre de grandeur et même parfois supérieure aux forces de répulsion. Il en résulte une possibilité non négligeable de création de forces latérales parasites nuisant au centrage des couronnes l'une par rapport à l'autre.

Selon une forme de réalisation avantageuse, les aimants de la couronne extérieure présentent une hauteur supérieure à la hauteur des aimants de la couronne intérieure.

De ce fait, la couronne extérieure joue un rôle de blindage plus efficace, ce qui rend le système encore moins sensible aux champs magnétiques extérieurs.

Selon une variante de réalisation les plans radiaux des couronnes intérieure et extérieure sont décalés de manière à engendrer des forces de sens contraire et sensiblement axiales appliquées sur les couronnes. Ces forces sont utilisées pour maintenir les couronnes en place lors de leur rotation autour des pivots.

Selon une réalisation particulière, une enveloppe de blindage en matériau magnétique recouvre la couronne extérieure.

Cette enveloppe de blindage assure une parfaite insensibilité aux perturbations magnétiques extérieures. Le fait que l'enveloppe soit solidaire de et recouvre la couronne extérieure-permet d'éviter tout risque d'attraction latérale engendrant un couple latéral parasite, risque qui surviendrait avec une enveloppe fixe et donc disjointe de la couronne.

La présente invention concerne aussi un compteur du type comprenant une première chambre et une seconde chambre séparées par une paroi étanche amagnétique, et comprenant en outre un système d'entraînement magnétique conforme à l'invention, la paroi formant un logement contenant la couronne d'aimants intérieure, la couronne d'aimants extérieure entourant ce logement.

Selon un mode de réalisation particulier d'un compteur conforme à l'invention, chaque couronne d'aimants est solidaire d'un arbre, le compteur comprenant en outre de part et d'autre du fond du logement un pivot axial terminé en pointe sur lequel repose l'arbre.

Ces pivots permettent de réduire les frottements lors de la rotation des couronnes.

Selon une variante de réalisation du compteur, la couronne d'aimants intérieure est reliée à un totalisateur, et la couronne extérieure est reliée à une turbine axiale.

Les caractéristiques et avantages de l'invention ressortiront mieux de la description qui va suivre, donnée à titre explicatif et non limitatif en référence aux dessins annexés dans lesquels :

- La figure 1 représente schématiquement une coupe d'un compteur d'eau conforme à l'invention,
- La figure 2 représente schématiquement une vue de dessus du système d'entraînement magnétique conforme à l'invention,
- La figure 3 représente schématiquement une vue de dessus d'une variante de réalisation du système d'entraînement magnétique conforme à l'invention,
- La figure 4 représente schématiquement une coupe d'un système d'entraînement magnétique conforme à l'invention.

Le système d'entraînement magnétique selon l'invention va maintenant être décrit en combinaison avec un compteur d'eau.

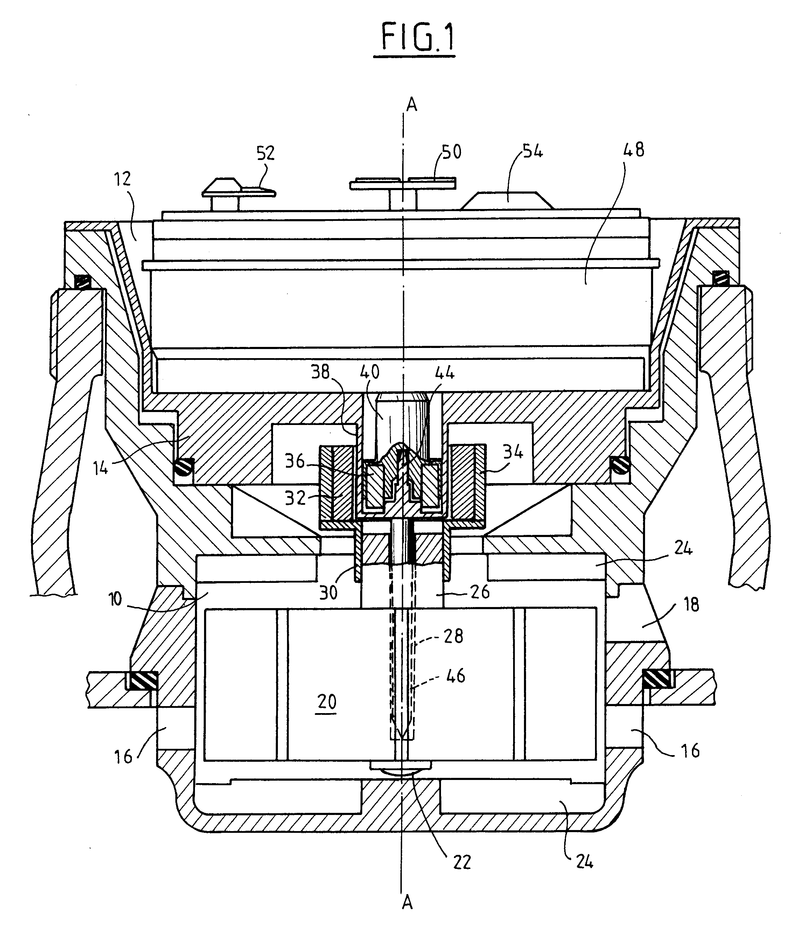

En référence à la figure 1, on décrit un compteur d'eau conforme à l'invention. Ce compteur comprend une première chambre 10 et une seconde chambre 12 séparées par une paroi étanche amagnétique 14.

L'eau pénètre dans la première chambre 10 par une entrée 16 et en ressort par une sortie 18. La circulation du fluide dans la première chambre 10 entraîne en rotation une turbine axiale 20. Cette turbine 20 peut être en matériau de densité voisine de 1, par exemple sensiblement égale à 0,9. Lorsque le compteur est en eau mais sans que le fluide ne circule, la turbine 20 repose au fond de la chambre 10 sur une butée 22.

La première chambre 10 est munie de chicanes 24 disposées de part et d'autre de la turbine 20, au fond et sur la partie supérieure de la chambre 10. Ces chicanes permettent, lors de la circulation du fluide, la création de remous et de tourbillons qui mettent la turbine en lévitation et la maintiennent en position d'équilibre.

La turbine 20 possède un arbre axial 26 muni d'un conduit axial 28. Un support amagnétique 30 est fixé à l'extrémité de l'arbre 26.

Une couronne 32 d'aimants centrée sur l'axe de la turbine est fixée sur le support 30. Cette couronne d'aimants peut être réalisée par exemple en matériau magnétique fritté, ferrite ou plasto-ferrite, dans lequel on induit un champ magnétique aux emplacements que l'on désire aimanter. Par cette technique connue, on peut donc obtenir des aimants d'aimantation, de polarité et de répartition suivant la circonférence de la couronne des aimants déterminées. La couronne peut aussi être réalisée à l'aide d'un support amagnétique muni de logements suivant sa circonférence dans lesquels on fixe des aimants.

Dans l'exemple de réalisation représenté sur la figure 1, une enveloppe de blindage 34 en matériau magnétique, fer doux ou nickel par exemple, recouvre la couronne d'aimants 32.

La couronne d'aimants 32 solidaire de la turbine 20 constitue la partie entraînante du système d'entraînement magnétique du compteur. La partie menée est constituée par une seconde couronne d'aimants 36 intérieure à la première 32 mais située dans la seconde chambre 12 et plus précisément dans un logement axial 38 pratiqué dans la paroi 14 de séparation.

La seconde couronne d'aimants 38 peut être constituée par un support cylindrique en matériau amagnétique muni de logements suivant sa circonférence où sont fixés des aimants en forme de bâtonnets par exemple.

La couronne intérieure 36 et la couronne extérieure 32 sont concentriques et peuvent entrer en rotation autour de l'axe principal AA qui est l'axe de rotation de la turbine 20.

Selon l'invention, le système d'entraînement magnétique est du type répulsif, chaque couronne comprenant au moins quatre aimants

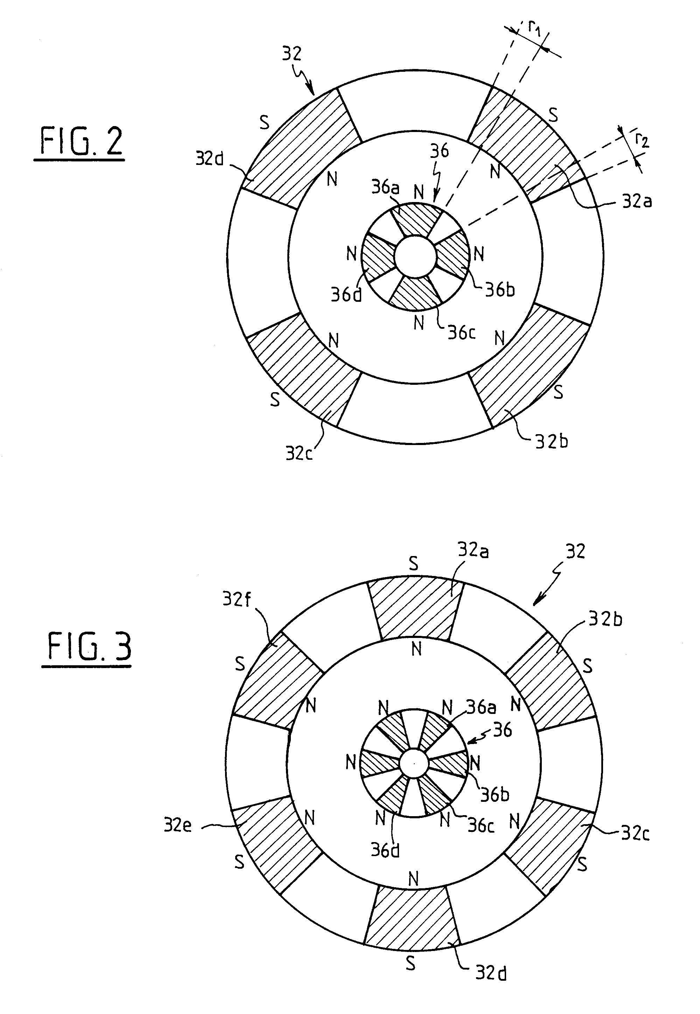

Sur la figure 2, on peut voir une vue de dessus d'une première variante de réalisation d'un tel système d'entraînement.

La première couronne 32, extérieure, comprend quatre aimants identiques référencés 32a, 32b, 32c, 32d régulièrement répartis sur la circonférence de la couronne.

La seconde couronne 36, intérieure, comprend elle aussi quatre aimants identiques, référencés 36a, 36b, 36c, 36d régulièrement répartis sur la circonférence de la couronne.

Le système d'entraînement est du type répulsif ; elle signifie que les pôles d'un même type (par exemple Nord, noté N sur la figure 2) des aimants 36a à 36d de la couronne intérieure 36 sont orientés vers la périphérie extérieure de la couronne 36 et que les pôles de ce même type (Nord) des aimants 32a à 32d de la couronne extérieure 32 sont orientés vers la périphérie intérieure de la couronne 32.

A l'équilibre, les forces répulsives s'exerçant entre les pôles de même type des deux couronnes entraînent un autocentrage des deux couronnes, la plus grande distance possible étant maintenue entre les aimants de la couronne 36 intérieure et ceux de la couronne extérieure 32. L'autocentrage permet de réduire les couples latéraux parasites et donc d'améliorer la sensibilité du compteur comme on peut le voir sur la figure 2, les aimants ont une extension telle que les aimants des différentes couronnes se recouvrent partiellement. Ainsi une extrémité de l'aimant 32a par exemple, est en regard avec une extrémité de l'aimant 36a (recouvrement référencé r1) et l'autre extrémité de l'aimant 32a est en regard avec une extrémité de l'aimant 36b (recouvrement référence r2).

Ce recouvrement permet d'améliorer la stabilité de la position concentrique des deux couronnes.

Sur la figure 3, on a représenté une autre variante de réalisation à six aimants identiques et régulièrement répartis (référencés de 32a à 32f et de 36a à 36f) par couronne. Dans cet exemple, les aimants sont orientés pour qu'il y ait autocentrage de la couronne intérieure par rapport à la couronne extérieure sous l'effet de la répulsion entre aimants des différentes couronnes, mais les aimants ne se recouvrent pas, leur nombre permettant d'assurer une stabilité suffisante à l'autocentrage.

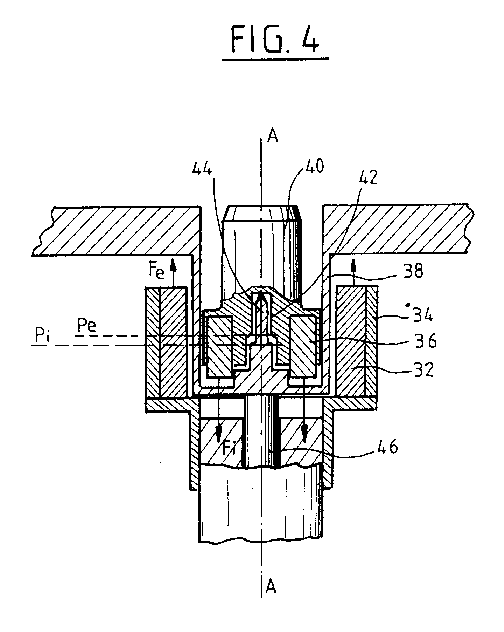

Sur la figure 4 qui représente schématiquement une coupe d'un système d'entraînement conforme à l'invention, on peut voir que les aimants de la couronne extérieure 32 présentent une hauteur supérieure à la hauteur des aimants de la couronne intérieure 36. De cette manière et avec l'aide de l'enveloppe de blindage 34, on s'assure de l'insensibilité du système aux champs magnétiques extérieurs et perturbateurs.

Sur la figure 4 on voit encore que le plan radial Pi passant à mi-hauteur de la couronne intérieure 36 est décalé et situé au dessous du plan radial Pe passant à mi-hauteur de la couronne extérieure 32. De cette manière, un couple de forces Fe, Fi de sens contraire et sensiblement axiales est appliqué sur les couronnes 32, 36. La force Fe tire la couronne extérieure 32 vers la haut (lorsque le système est orienté de la manière représenté sur la figure 4) alors que la force Fi tire la couronne intérieure 36 vers le bas.

La couronne intérieure 36 est solidaire d'un arbre axial 40 possédant un conduit axial 42.

Le fond du conduit 42 repose sur un pivot axial 44 terminé en pointe, fixé au fond du logement 38 de la paroi 14. Le point de contact étant réduit entre l'arbre 40 et le pivot 44, les frottements sont réduits et la force Fi appliquée sur la couronne 36 permet un bon maintien de l'ensemble.

On peut voir sur la figure 1 que la structure est identique du côté de la couronne entraînante. Un pivot axial 46 terminé en pointe s'étend dans la première chambre 10 et le fond du conduit 28 repose sur cette pointe lorsque le fluide circule dans la première chambre 10. De la même manière, les frottements entre l'extrêmité du pivot 46 et l'arbre sont réduits alors que la force Fe permet le maintien de l'ensemble.

On comprend donc que sous l'effet de la circulation du fluide dans la chambre 10, la turbine 20 entre en rotation autour du pivot 46 (axe AA) entraînant dans son mouvement la couronne extérieure 32 qui lui est solidaire. Sous l'action de répulsion des aimants, la couronne intérieure 36 est mise en rotation autour du pivot 44 qui est parfaitement aligné sur le pivot 46 (axe AA).

L'arbre 40, solidaire de la couronne intérieure 36, est relié à un totalisateur 48.

On peut voir sur la figure 1 divers instruments usuels qui permettent l'étalonnage ainsi que la lecture des mesures effectuées : une roue d'étalonnage stroboscopique 50, une aiguille de mesure 52 et un compteur à chiffres 54.

Le système d'entraînement magnétique appliqué à un compteur d'eau dans l'exemple décrit, peut être appliqué sans sortir du cadre de l'invention à d'autres types de compteur et même à d'autres dispositifs, un ensemble de pompage, par exemple.

## Revendications

1. Système d'entraînement magnétique caractérisé en ce qu'il comprend deux couronnes concentriques (32,36) d'aimants ; les pôles d'un même type des aimants (36a,...) de la couronne intérieure (36) étant orientés vers.la.périphérie extérieure de la couronne intérieure (36), les pôles de ce même type des aimants (32a,...) de la couronne extérieure (32) étant orientés vers la périphérie intérieure de la couronne extérieure (32), les aimants de chacune des couronnes étant en nombre égal et suffisant pour assurer l'autocentrage de la couronne intérieure (36) par rapport à la couronne extérieure (32), un mouvement de rotation de l'une des couronnes autour de son axe central (AA) entraînant l'autre couronne en rotation.

2. Système d'entraînement magnétique selon la revendication 1, caractérisé en ce que les aimants de chaque couronne (32,36) sont régulièrement répartis sur une circonférence de la couronne considérée, les aimants (32a,...) de la couronne extérieure (32), étant identiques entre eux et les aimants (36a,...) de la couronne intérieure (36) étant identiques entre eux.

3. Système d'entraînement magnétique selon la revendication 2, caractérisé en ce que les aimants ont une extension telle que les aimants des différentes couronnes (32,36) se recouvrent partiellement.

4. Système d'entraînement magnétique selon l'une quelconque des revendications 1 à 3, caractérisé en ce que chaque couronne (32,36) comprend au moins quatre aimants.

5. Système d'entraînement magnétique selon l'une quelconque des revendications 1 à 4, caractérisé en ce que les aimants (32a,...) de la couronne extérieure (32) présentent une hauteur supérieure à la hauteur des aimants (36a,...) de la couronne intérieure (36).

6. Système d'entraînement magnétique selon la revendication 5, caractérisé en ce que les plans radiaux (Pi,Pe) des couronnes intérieure et extérieure (36,32) sont décalés de manière à engendrer des forces (Fi,Fe) de sens contraire et sensiblement axiales appliquées sur les couronnes (36,32).

7. Système d'entraînement magnétique selon l'une quelconque des revendications 1 à 6, caractérisé en ce qu'une enveloppe de blindage (34) en matériau magnétique recouvre la couronne extérieure (32).

8. Compteur comprenant une première chambre (10) et une seconde chambre (12) séparées par une paroi étanche amagnétique (14), caractérisé en ce qu'il comprend un système d'entraînement magnétique selon l'une quelconque des revendications 1 à 7, la paroi (14) formant un logement (38) contenant la couronne d'aimants intérieure (36), la couronne d'aimants extérieure (32) entourant ce logement (38).

9. Compteur selon la revendication 8, caractérisé en ce que chaque couronne d'aimants (32,36) est solidaire d'un arbre (26,40), et en ce que le compteur comprend en outre de part et d'autre du fond du logement (38) un pivot axial terminé en pointe (44,46) sur lequel repose l'arbre (26,40).

10. Compteur selon la revendication 9, caractérisé en ce que la couronne d'aimants intérieure (36) est reliée à un totalisateur (48), et en ce que la couronne d'aimants extérieure (32) est reliée à une turbine axiale (20).

# FIG.1

FIG. 2

FIG. 3

# FIG. 4

Office européen
des brevets

**RAPPORT DE RECHERCHE EUROPEENNE**

Numero de la demande

EP    92 40 1379

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-B-1 165 144 (SIEMENS-SCHUCKERTWERKE AG)<br><br>* colonne 2, ligne 41 - colonne 3, ligne 16; figures 1,2 *<br>--- | 1,2,4,8, 10 | H02K49/10<br>G01F1/075 |
| Y | CH-A-392 675 (J.MARX)<br><br>* page 2, ligne 40 - ligne 46; figures 1,3 *<br>--- | 1,2,4,8, 10 | |
| A | DE-U-8 631 387 (MINOL MESSTECHNIK W.LEHMANN KG)<br>* page 6, ligne 25 - page 7, ligne 20; figure 1 *<br>--- | 8,9 | |
| A | GB-A-2 010 596 (UNITED GAS INDUSTRIES LTD.)<br>* page 1, ligne 103 - ligne 116; figure 1 *<br>--- | 1 | |
| A | EP-A-0 408 093 (FEDEGARI AUTOCLAVI SPA)<br>* figure 1 *<br><br>----- | 6 | |
| | | | **DOMAINES TECHNIQUES RECHERCHES (Int. Cl.5)**<br><br>H02K<br>G01F<br>G01D<br>F04D |

Le présent rapport a été établi pour toutes les revendications

| Lieu de la recherche | Date d'achèvement de la recherche | Examinateur |
|---|---|---|
| BERLIN | 01 SEPTEMBRE 1992 | LEOUFFRE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 01.82 (P0402)